# EUROPÄISCHE PATENTSCHRIFT

(11) **EP 2 408 541 B1**
(45) Veröffentlichungstag und Bekanntmachung des Hinweises auf die Patenterteilung: **21.11.2012**
(21) Anmeldenummer: 10710791.4
(22) Anmeldetag: 12.03.2010
(51) Int. Cl.: B01D 53/58, B01D 53/86, B01D 53/56

(54) **KOMBINIERTE ABGASBEHANDLUNG AMMONIAK- UND STICKOXID-HALTIGER ABGASSTRÖME IN INDUSTRIEANLAGEN**
COMBINED WASTE GAS TREATMENT OF WASTE GAS STREAMS CONTAINING AMMONIA AND NITROGEN OXIDES IN INDUSTRIAL PLANTS
TRAITEMENT COMBINÉ DE COURANTS D'EFFLUENT GAZEUX CONTENANT DE L'AMMONIAC ET DES OXYDES D'AZOTE DANS DES INSTALLATIONS INDUSTRIELLES

(30) Priorität: 20.03.2009 DE 102009013691
(43) Veröffentlichungstag der Anmeldung: 25.01.2012
(73) Patentinhaber: ThyssenKrupp Uhde GmbH, 44141 Dortmund (DE)
(72) Erfinder: MÜLLER, Ivo, 44225 Dortmund (DE); JOHANNING, Joachim, 46045 Oberhausen (DE)
(86) Internationale Anmeldenummer: PCT/EP2010/001576
(87) Internationale Veröffentlichungsnummer: WO 2010/105778

(56) Entgegenhaltungen:
- DE-T2- 69 006 367
- US-A- 4 744 962

## Beschreibung

Die Erfindung betrifft ein Verfahren sowie dessen Anwendung zur kombinierten Entfernung von Ammoniak- und Stickoxid-haltigen Abgasströmen in einer Industrieanlage, nach der selektiven nicht-katalytischen Reduktion in einem Temperaturbereich von 850°C bis 1100°C oder nach der selektiven katalytischen Reduktion in einem Temperaturbereich von 150°C bis 550°C. Dabei soll die Umsetzung von Ammoniak und Stickoxiden (NOₓ) durch die vorherige Vermischung zweier oder mehrerer in der Industrieanlage vorhandenen Abgasströme erfolgen, wobei die Temperatur der Mischung und die notwendigen Abbaurraten an Ammoniak und an Stickstoff entscheidend sind für die Wahl der selektiven nicht-katalytischen Reduktion oder der selektiven katalytischen Reduktion. Somit dienen bei diesem neuartigen Verfahren beide sowieso in den Prozessabgasen vorhandenen Schadstoffe (Ammoniak und Stickoxide) einander als Reaktionspartner, um sich gegenseitig effizient abzubauen. Dies reduziert den Aufwand gegenüber einer getrennten Aufreinigung der jeweiligen Abgasströme.

In einigen Industrien, wie z. B. bei der Herstellung von Düngemitteln fallen in verschiedenen Verfahrensabschnitten Abgasströme an, die mit Ammoniak bzw. mit Stickoxiden belastet sind, die hinsichtlich der Umwelt- sowie der Geruchsbelastung, die derartige Verbindungen mit sich bringen, vor Abgabe an die Umgebungsluft aufgereinigt werden müssen. Dabei handelt es sich beispielsweise um die Abgasströme des Niedrigdruck-Absorbers in einer Harnstoffsyntheseanlage. Derartige Abgasströme sind insofern problematisch, da ihre Emissionswerte weit oberhalb der empfohlenen Konzentrationen, die in der Technischen Anleitung zur Reinhaltung der Luft, Erste Allgemeine Verwaltungsvorschrift zum Bundes-Immissionsschutzgesetz, Stand 2002 vorgeschlagen werden. Dabei wird für Ammoniak beispielsweise ein Wert von 50 mg/Nm³ gefordert. Teilweise sind im Abgas auch niedere Alkane, wie beispielsweise Methan, das ein starkes Treibhausgas ist, enthalten.

Die Entfernung von Ammoniak aus Abluft wird in den in der Patentliteratur bekannten Verfahren mittels Zugabe von Schwefelsäure oder Salpetersäure erreicht. Dieses Verfahren ist auch unter dem Namen "saure Wäsche", wie beispielsweise in der US 3,607,022 ausgeführt wird, bekannt. Das Ammoniak wird über chemische Absorption aus dem Abluftstrom entfernt und im sauren Lösungsmittel in das korrespondierende Ammoniumsalz umgesetzt. Der Einsatz von Salpetersäure führt zur Bildung von Ammoniumnitrat und der Einsatz von Schwefelsäure bewirkt die Bildung von Ammoniumsulfat. Damit erfordert die saure Wäsche einen großen apparativen und logistischen Aufwand, da neben dem komplexen Wäscher auch entsprechende Mengen Säure gekauft und gelagert werden müssen.

Zudem bilden diese Ammoniumsalz-haltigen Lösungen nun Abwasserströme, die nicht ohne weiteres an das Abwassersystem abgegeben werden können. Somit muss auch hier wieder eine Aufreinigung erfolgen bzw. eine Lösung zur Entsorgung der produzierten Salzlösung gefunden werden.

Des Weiteren gehört zum Stand der Technik zur Beseitigung von Ammoniak in Abgasströmen die Verbrennung in Fackeln. Dabei werden aber zur Sicherstellung eines Mindestbrennwertes je nach Konzentration an Ammoniak und anderen brennbaren Verunreinigungen signifikante Mengen an Stützgas benötigt, was die Kohlendioxid-Emmissionen der Anlage erhöht. Die in der Fackel stattfindende Verbrennung von Ammoniak führt außerdem zur Bildung von Stickoxiden, die wie oben schon aufgeführt ihrerseits Umweltschadstoffe sind und damit die Bildung dieser Schadstoffe vermieden werden sollte. Es gibt außerdem Hinweise, dass in Europa offene Fackeln mangels möglicher Emissionsmessungen von Seiten der Behörden als problematisch für den kontinuierlichen Betrieb angesehen werden.

Ein weiteres in der Patentliteratur erwähntes Verfahren zur Aufreinigung von Ammoniak-haltigen Abgasströmen ist die selektive Oxidation, die beispielsweise in der DE 695 30 024 T2 und der EP 0 514 729 B1 beschrieben ist, die mit Hilfe spezieller Katalysatoren durchgeführt wird. Allerdings ist bei größeren Konzentrationen aufgrund der freiwerdenden Wärmemengen eine ausreichende Kühlung zu gewährleisten, die den apparativen Aufwand erhöht. Damit eignet sich dieses Verfahren vorwiegend für Ströme, die mit geringen Mengen an Ammoniak verunreinigt sind.

Im Patent DE 4314896 A1 wird der Abbau von Ammoniak durch gezielte Zugabe von Stickoxiden beschrieben. Die benötigten Stickoxide werden durch eine separate Quelle (z.B. Dieselmotor) oder durch eine teilweise Oxidation von Ammoniak erzeugt. Unter Verwendung eines Katalysators reagieren der Ammoniak und die Stickoxide im Wesentlichen nach den nachstehenden Summenreaktionen:

(1) 4 NO + 4 NH₃ + O2 → 4 N₂ + 6 H₂O

(2) 6 NO₂ + 8 NH₃ → 7 N₂ + 12 H₂O

Bei den in diesem Patent aufgeführten Temperaturen des Abgases müssen Katalysatoren zur Erhöhung der Reaktionsgeschwindigkeit eingesetzt werden. Neben hohen Investitionskosten besteht bei Katalysatoren die Gefahr, dass diese bei Abgasen mit festen Verunreinigungen (z.B. Asche) verstopfen oder sogar deaktiviert werden. Desweiteren ist zur Reinigung des ammoniakhaltigen Abgases eine künstliche Stickoxidquelle notwendig.

Ein ähnlicher Reinigungspozess ist in EP1350552B1 aufgeführt. In einem ersten Schritt findet die Verbrennung des Ammoniaks in einer thermischen Nachverbrennungsanlage statt, wobei unweigertich Stickoxide entstehen. Die Erfindung besteht nun darin, dass die Verbrennung des Ammoniaks nicht vollständig abläuft und der nicht-verbrannte Ammoniakanteil somit in einem weiteren Schritt dazu genutzt wird, die Stickoxide mittels selektiver katalytischer Reduktion abzubauen. Bei diesem Verfahren ist mit einer aufwendigen Regelung zu rechnen.

Eine weitere Alternative für den Abbau von Ammoniak in Abgasen ist die Adsorption z. B. an Aktivkohle oder Zeolithen, wie in der US 6,261,345 B1 offenbart wird. Nachteilig an diesem Verfahren ist ihr instationärer Betrieb, der den apparativen Aufwand erhöht.

Die physikalische Absorption von Ammoniak mit Lösungsmittel wie Wasser oder Glykolen gehört nach der US 5,230,877 ebenfalls zum Stand der Technik. Die hier erreichbaren Reinheiten des Abgases hängen jedoch stark von den Betriebsbedingungen der Wäsche, wie Temperatur und Druck ab. Vorteilhaft sind hoher Druck und niedrige Temperatur, die jedoch zusätzliche Investitions- und Betriebskosten verursachen.

Stickoxide können sich bei der Verbrennung fossiler Energieträger bilden oder fallen bei der Produktion von Salpetersäure an. Stickoxide sind gesundheits- und umweltschädlich und führen beispielsweise zu Phänomenen wie saurem Regen, Smog und Ozonbildung, weshalb für diesen Stoff gesetzliche Emmisionsgrenzwerte existieren. Für Erdgas-betriebene Kessel liegt der Grenzwert, der in der Technischen Anleitung zur Reinhaltung der Luft, Erste Allgemeine Verwaltungsvorschrift zum Bundes-Immissionsschutzgesetz, Stand 2002 vorgeschlagen wird, zurzeit bei 150 mg/Nm³.

Die naheliegendste Vorgehensweise zur Stickoxidreduktion ist eine entsprechende Modifikation der verursachenden Quellen. So können bei Heizkesseln beispielsweise spezielle Stickoxid-arme Brenner eingesetzt und/oder die Verbrennung, was die Vorheizung der Luft sowie die Abgasrückführung einschließt, entsprechend angepasst werden. Problematisch ist hierbei, dass Randbedingungen des Prozesses solchen Anpassungen entgegen stehen können und die Maßnahmen aus finanzieller Sicht zudem recht aufwändig werden können.

Für die Entfernung von Stickoxiden aus Abgasen sind vor allem die selektive nicht-katalytische Reduktion (SNCR) und die selektive katalytische Reduktion (SCR) weit verbreitet. Ammoniak und Stickoxide reagieren dabei in der Gasphase (SNCR) oder auf der Katalysatoroberfläche (SCR) im Wesentlichen nach den bereits vorgestellten Summenreaktionen (1) und (2).

Die selektive nicht-katalytische Reduktion (SNCR) läuft bei einer Temperatur von 850°C bis 1100°C ab. Dabei dient als Reduktionsmittel üblicherweise eine wässrige Ammoniak- oder Harnstofflösung. Eine Temperatur von > 900°C ist notwendig, um die nötige Reaktionsgeschwindigkeit zu erreichen. Bei Temperaturen > 1000°C bringt dieses Verfahren das Problem einer erhöhten Stickoxidbildung aus Ammoniak mit sich, das nach folgender Summenformel abläuft:

(3) 4 NH₃ + 5 O₂ → 4 NO + 6 H₂O

Im Gegensatz dazu läuft die selektive katalytische Reduktion bei Temperaturen von 150°C bis 550°C ab und die Gefahr der Stickoxidbildung ist als eher gering einzustufen. Dieses Verfahren bedingt allerdings den Einsatz eines Katalysators. Diese bestehen im Wesentlichen aus Schwermetalloxiden, Zeolithen, Aktivkoks und Eisenoxid-Chromoxiden.

SNCR und SCR können auch miteinander kombiniert werden, um die Vorteile beider Verfahren (niedrige Stickoxidemissionen und geringe Katalysatormengen) zu nutzen (z. B. nach DE 690 06 367 T2). Hier ist darauf zu achten, dass die für beide Prozesse jeweils benötigten Temperaturen im Abgas vorliegen.

US 4744962 A1 offenbart beispielhaft ein Verfahren zur kombinierten Beseitigung sowohl von Ammoniak in einem Ammoniak-haftigen Abgasstrom und von Stickoxiden in einem Stickoxid-haltigen Abgasstrom in einer FCC-Anlage nach dem SCNR oder SCR Verfahren wobei der Ammoniak und die Stickoxide miteinander reagieren und zu Stickstoff und Wasser umgesetzt werden.

Haupteinsatzgebiete der SNCR und SCR sind unter anderem die Entstickung von Kraftwerks- und Müllverbrennungsabgasen und die Reinigung von Abluft aus Salpetersäureanlagen. Das SCR-Verfahren wird seit einiger Zeit auch zur Stickoxidreduzierung von Autoabgasen eingesetzt. In Ammoniak-/Harnstoff-Anlagen ist der Einsatz von SNCR und SCR bislang nicht Stand der Technik.

Aus dem Stand der Technik geht damit nur hervor, die Abgasströme, die Ammoniak bzw. Stickoxide enthalten, separat voneinander nach den zuvor genannten Methoden zu behandeln und aufzureinigen. Dies ist Apparate-technisch sehr aufwendig und zudem äußerst kostenintensiv.

Aufgabe der Erfindung ist es einen Prozess zur Verfügung zu stellen, der es erlaubt, zwei separate Abgasströme einer Industrieanlage, von denen der eine Ammoniak-haltig und der andere Stickoxid-haltig ist, simultan in Kombination derart an Ammoniak bzw. Stickoxiden abzureichern, dass die gesetzlich vorgeschriebenen Emissionsgrenzwerte eines oder beider Schadstoffe eingehalten werden. Der neuartige Prozess soll in bestehende Industrieanlagen integrierbar sein und die oben geschilderte Problematik der separaten Abgasbehandlung soll nicht mehr vorhanden sein.

Dies wird erreicht durch den Einsatz eines Verfahrens zur kombinierten Beseitigung sowohl von Ammoniak in einem oder mehreren Ammoniak-haltigen Abgasströmen als auch von Stickoxiden in einem oder mehreren zusätzlichen weiteren Stickoxid-haltigen Abgasströmen in einer kombinierten Ammoniak-Harnstoffsyntheseanlage, nach der selektiven nicht-katalytischen Reduktion in einem Temperaturbereich von 850°C bis 1100°C, mit welcher Stickoxid-Abbauraten von bis zu 80 % erreicht werden oder nach der selektiven katalytischen Reduktion in einem Temperaturbereich von 150°C bis 550°C, mit welcher Stickoxid-Abbauraten von bis zu 99% erreicht werden, wobei der Ammoniak und die Stickoxide miteinander reagieren und zu Stickstoff und Wasser umgesetzt werden, wobei der zu behandelnde Ammoniak-haltige Abgasstrom aus einem Niedrigdruckabsorber und/oder einem atmosphärischen Absorber des Harnstoffsyntheseanlagenteils und der zu behandelnde Stickoxid-haltige Abgasstrom aus einem Rauchgaskanal eines Primärreformers des Ammoniaksyntheseanlagenteils der kombinierten Ammoniak-Hamstoffsyntheseanlage vermischt werden und in Abhängigkeit der Temperatur der Mischung und in Abhängigkeit der zu erzielenden Abbaurate der Stickoxide eine selektive nicht-katalytische Reduktion oder eine selektive katalytische Reduktion durchgeführt wird, wobei sowohl der Ammoniak als auch die Stickoxide der vermischten Abgasströme simultan im gleichen Verfahrensschritt abgebaut werden.

In dem beschriebenen Ammoniak-haltigen Abgasstrom, der mit dem Stickoxid-haltigen Abgasstrom vermischt wird, können zusätzlich niedere Alkane und/oder Wasserstoff und/oder Sauerstoff enthalten sein.

In einer vorteilhaften Ausgestaltung des Verfahrens wird die Ammoniak-Konzentration zu der Stickoxid-Konzentration in den zu mischenden Abgasströmen übersteiöchiometrisch eingestellt, so dass die Umsetzung zu Stickstoff und Wasser ohne Zusatz weiterer Komponenten abläuft.

Eine weitere Möglichkeit der Ausgestaltung der Erfindung ist es, in die Mischung des Ammoniak-haltigen Abgasstroms mit dem Stickoxid-haltigen Abgasstrom zusätzlich ein Reduktionsmittel einzudüsen, das aus einer Gruppe ausgewählt wird, die Ammoniak, Ammoniakwasser und Harnstofflösung enthält.

In weiterer Ausgestaltung der Erfindung wird zunächst eine selektive nicht-katalytische Reduktion durchgeführt, an die sich eine selektive katalytische Reduktion anschließt.

Vorzugsweise wird der Katalysator für die selektive katalytische Reduktion aus einer Gruppe ausgewählt, die Metalloxide (z.B. Titandioxid, Vanadiumpentoxid), Aktivkokse, Eisenoxid-Chromoxide und Zeolithe enthält. Der Katalysator kann als Vollkatalysator oder Trägerkatalysator auf Basis von SiO₂, Alumosilikat oder Al₂O₃ ausgeführt werden. Die möglichen Ausführungsformen beinhalten Schüttungen, Wirbelschichten und vorzugsweise monolithische bzw. wabenförmige Strukturen.

Zweckmäßig ist das beanspruchte Verfahren für Abgase mit einem Ammoniakgehalt von 30 bis 50.000 mg/Nm³ und einem Stickoxidgehalt von 75 bis 1500 mg/Nm³ geeignet.

Es werden nachfolgend anhand dreier Figuren einige Ausführungsvarianten der Erfindung näher erläutert. Dabei zeigen:
- Fig 1:: Eine schematische Verfahrensskizze des Prozesses, bei dem die selektive nicht-katalytische Reduktion zur kombinierten simultanen Beseitigung von Ammoniak und Stickoxiden zweier separater Abgasströme gezeigt ist.
- Fig. 2:: Eine Ausführungsform der Erfindung, bei der die selektive katalytische Reduktion zur kombinierten simultanen Beseitigung von Ammoniak und Stickoxiden zweier separater Abgasströme schematisch gezeigt ist.
- Fig. 3:: Eine Prinzipskizze einer kombinierten simultanen Abgasreinigung in einem Ammoniak-Hamstoffanlagen-Verbund basierend auf der nicht-selektiven katalytischen Reduktion.

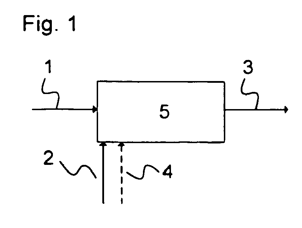

In Fig. 1 wird ein Ammoniak-haltiges Abgas 1 mit einem Stickoxid-haltigen Abgas 2 bei einer Temperatur von 850° bis 1100°C gemischt. Dabei kommt es in einer geeigneten Vorrichtung 5 zu einer Gasphasenreaktion zwischen Ammoniak und den Stickoxiden zu Stickstoff und Wasser, die über den Gasstrom 3 an die Umgebung abgegeben werden können. Dabei werden zusätzlich im Ammoniak-haltigen Abgas 1 enthaltene Kohlenwasserstoffe, wie beispielsweise Methane, thermisch zu Kohlendioxid und Wasser umgesetzt. Mit dieser Methode können Stickoxid-Abbauraten von bis zu 80 % erreicht werden. Die Reaktion von Ammoniak und Stickoxiden findet dabei unkatalysiert statt und wird als selektive nicht-katalytische Reduktion bezeichnet. Wie eingangs beschrieben, zielt dieses Verfahren nach dem Stand der Technik nur auf die Reduktion der Stickoxide ab.

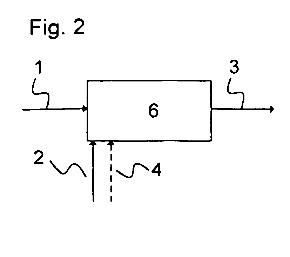

In einer weiteren Verfahrensvariante, die in Fig. 2 dargestellt ist, wird ein Ammoniak-haltiges Abgas 1 mit einem Stickoxid-haltigen Abgas 2 über ein geeignetes Katalysatormaterial 6, das in eine geeignete Vorrichtung integriert ist, geleitet, wobei es ebenfalls zur Bildung von Stickstoff und Wasser kommt. Der entstehende Gasstrom kann auch hier wieder an die Umgebung abgegeben werden. Diese Reaktion läuft in einem Temperaturbereich von 150° bis 550°C ab. Die Reaktion von Ammoniak und Stickoxiden findet dabei katalysiert statt und wird als selektive katalytische Reduktion bezeichnet. Vorteilhaft bei diesem Verfahren im Vergleich zur selektiven nicht-katalytischen Reduktion ist der reduzierte Temperaturbereich, bei dem die Umsetzung erfolgt, da hier die Gefahr der Stickoxidbildung aus dem abzubauenden Ammoniak gering ist. Mittels dieses Verfahrens können Stickoxid-Abbauraten von bis zu 99 % erzielt werden. Auch hier dient der ursprüngliche Zweck dieser Technologie allein der Reduktion von Stickoxiden.

Falls die Stickoxide gegenüber dem Ammoniak in überstöchiometrischer Menge vorliegen, können sowohl die in Fig. 1 beschriebene selektive nicht-katalytische Reduktion als auch die in Fig. 2 beschriebene selektive katalytische Reduktion mit einer zusätzlichen Eindüsung von Ammoniak, Ammoniakwasser oder Harnstofflösung 4 ausgestattet werden. Dies ermöglicht es, die Stickoxid-Konzentration noch weiter zu verringern als es unter Umständen mit den in den eingesetzten Abgasen vorhandenen Ammoniakmengen möglich wäre.

Liegen die Stickoxide in unterstöchiometrischen Mengen vor, müssen die aus der selektiven nicht-katalytischen Reduktion oder der selektiven katalytischen Reduktion resultierenden Ammoniak- und Stickoxidkonzentrationen im behandelten Abgas hinsichtlich der zu erreichenden Grenzwerte überprüft werden. Sollte eine stark überstöchiometrische Menge an Ammoniak zu übermäßigem Ammoniakschlupf führen, muss ein Teil des Ammoniak-haltigen Abgases unter Verwendung anderer Verfahren, wie z. B. der sauren Wäsche separat behandelt werden.

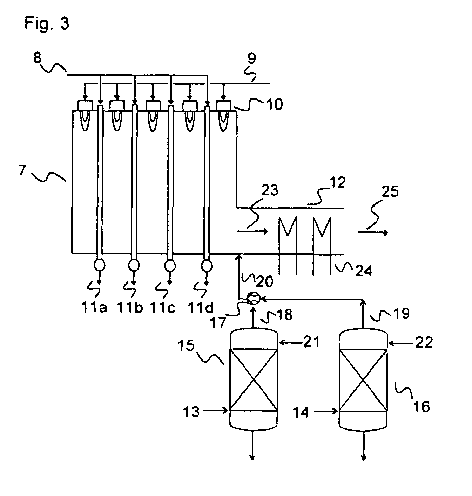

Nachfolgend wird die Erfindung anhand eines Ausführungsbeispiels dargelegt und in Fig. 3 graphisch dargestellt. Dabei wird davon ausgegangen, dass die Ammoniak-haltigen Abgasströme 18; und 19 einem Niedrigdruck-Absorber 16 und dem atmosphärischen Absorber 15 einer Harnstoffsyntheseanlage entnommen werden Dabei stammt der zu reinigende Strom 13 des atmosphärischen Absorbers 15 aus einer Einheit in der Harnstoffsyntheseanlage, die zur Eindampfung dient, wohingegen der zu reinigende Strom 14 aus der Syntheseeinheit der Hamstoffanlage herrührt. In die beiden Absorber werden die Waschlösungen 21 bzw. 22 gegeben. Die in diesen Prozessen gereinigten Abgasströme 18 und 19 weisen jedoch noch Ammoniak in einer Massenkonzentration zwischen 0,1 und 5 % auf. Hinzu kommen Anteile an Methan und Wasserstoff, die sich insbesondere im Ammoniak-haltigen Abgasstrom 19 des Niedrigdruck-Absorbers 16 nachweisen lassen.

Ein Stickoxid-haltiger Abgasstrom ist das Rauchgas 23 aus dem Primärreformer 7 einer Ammoniakanlage, die der Harnstoffanlage fast ausnahmslos vorgeschaltet ist. Das Rauchgas 23 entsteht durch die Verbrennung eines Erdgas/LuftGemisches 9 mittels eines Brenners 10 im Primärreformer 7, der zur Erzeugung des Synthesegases 11a, 11b, 11c, 11d aus einem Erdgasstrom 8 dient. Die Stickoxid-Konzentration liegt im Allgemeinen nahe des bislang üblichen Grenzwerts von 150 mg/Nm³. Das Rauchgas 23 verlässt den Primärreformer 7 durch den Rauchgaskanal 12, in dem ein Großteil der noch mitgeführten Wärmeenergie durch Wärmetauscher 24 zurückgewonnen wird.

Zur Durchführung der selektiven nicht-katalytischen Reduktion werden die einzelnen Ströme 18 und 19 zunächst gemischt. Aufgrund der unterschiedlichen Druckniveaus kann hierzu ein Ejektor 17 genutzt werden. Im Anschluss wird die Mischung der Ammoniak-haltigen Abgasströme 20, dem Stickoxid-haltigen Rauchgas 23 zu Beginn des Rauchgaskanals 12 zugegeben. Hier treten die für dieses Verfahren geeigneten Temperaturen von ca. 1000°C auf. Am Beginn des Rauchgaskanals liegen die Stickoxide hauptsächlich in Form von NO (> 85 %) vor, wobei der Anteil an NO₂ im Verlauf des Rauchgaskanals 12 weiter zunimmt. Aus diesem Grund wird bei der selektiven nicht-katalytischen Reduktion hauptsächlich NO nach oben aufgeführter Summenreaktion (1) umgesetzt. Der entstehende Abgasstrom 25 kann nachfolgend an die Umgebung abgegeben werden.

Aufgrund der kleinen Ammoniak-haltigen Ströme 18, 19, die sich in einem Bereich von < 2 t/h bewegen, und dem großen Rauchgastrom 23, der in einem Bereich von > 300 t/h liegt, kommen die Stickoxide überstöchiometrisch vor, so dass das Ammoniak bei einer idealen Mischung der Ströme nahezu vollständig umgesetzt werden kann. Für die Stickoxide ist eine Reduktion der Konzentrationen im Prozentbereich zwischen 5-15% möglich. Eine höhere Reduktion der Stickoxide wäre durch weitere Zugabe eines Reduktionsmittels wie Ammoniak sowie durch den additiven Einsatz der selektiven katalytischen Reduktion möglich. Die im Abgasstrom 19 mitgeführten Wasserstoff- und Methanmengen werden bei den hohen Temperaturen ebenfalls umgesetzt. Die daraus resultierende Temperaturerhöhung fällt mit ca. 2-3°C gering aus und hat damit keine signifikanten Auswirkungen auf den Prozess.

Vorteile, die sich aus der Erfindung ergeben:
- in bestehende Industrieanlagen leicht zu integrierender Prozess
- Verwendung von an sich bereits etablierten Verfahren
- herkömmliche Behandlung der Abluftströme mittels Säuren oder Fackeln ist nicht mehr notwendig.
- aufwendige Abwasserbehandlung bzw. -entsorgung, wie sie z.B. bei der sauren Wäsche anfällt, entfällt, was mit einer Kostenersparnis verbunden ist.
- separate Abgasbehandlung von Ammoniak-haltigen und Stickoxid-haltigen Abgasströmen findet nicht mehr statt, was die Anlage wirtschaftlicher macht
- Einsparung an Reduktionsmittel, die für die Stickoxidreduktion benötigt werden

**Bezugszeichenliste**
- 1: Ammoniak-haltiges Abgas
- 2: Stickoxid-haltiges Abgas
- 3: Gasstrom
- 4: Ammoniak, Ammoniakwasser oder Harnstofflösung
- 5: Vorrichtung
- 6: Katalysatormaterial
- 7: Primärreformer
- 8: Erdgas
- 9: Erdgas-Luft-Gemisch
- 10: Brenner
- 11a, b, c, d: Synthesegas
- 12: Rauchgaskanal
- 13: zu reinigender Strom
- 14: zu reinigender Strom
- 15: atmosphärischer Absorber
- 16: Niedrigdruck-Absorber
- 17: Ejektor
- 18: Ammoniak-haltiger Abgasstrom
- 19: Ammoniak-haltiger Abgasstrom
- 20: Mischung Ammoniak-haltiger Abgasströme
- 21: Waschlösung
- 22: Waschlösung
- 23: Rauchgas
- 24: Wärmetauscher
- 25: gereinigter Strom

## Patentansprüche

1. Verfahren zur kombinierten Beseitigung sowohl von Ammoniak in einem oder mehreren Ammoniak-haltigen Abgasstrom als auch von Stickoxiden in einem oder mehreren zusätzlichen weiteren Stickoxid-haltigen Abgasstrom in einer kombinierten Ammoniak-Harnstoffsyntheseanlage, nach der selektiven nicht-katalytischen Reduktion in einem Temperaturbereich von 850°C bis 1100°C, mit welcher Stickoxid-Abbauraten von bis zu 80 % erreicht werden oder nach der selektiven katalytischen Reduktion in einem Temperaturbereich von 150°C bis 550°C, mit welcher Stickoxid-Abbauraten von bis zu 99% erreicht werden, wobei der Ammoniak und die Stickoxide miteinander reagieren und zu Stickstoff und Wasser umgesetzt werden, wobei der zu behandelnde Ammoniak-haltige Abgasstrom aus einem Niedrigdruckabsorber und/oder einem atmosphärischen Absorber des Harnstoffsyntheseanlagenteils und der zu behandelnde Stickoxid-haltige Abgasstrom aus einem Rauchgaskanal eines Primärreformers des Ammoniaksyntheseanlagenteils der kombinierten Ammoniak-Harnstoffsyntheseanlage vermischt werden und in Abhängigkeit der Temperatur der Mischung und in Abhängigkeit der zu erzielenden Abbaurate der Stickoxide eine selektive nicht-katalytische Reduktion oder eine selektive katalytische Reduktion durchgeführt wird, wobei sowohl der Ammoniak als auch die Stickoxide der vermischten Abgasströme simultan im gleichen Verfahrensschritt abgebaut werden.

2. Verfahren nach Anspruch 1, **dadurch gekennzeichnet, dass** der Ammoniak-haltige Abgasstrom, der mit dem Stickoxid-haltigen Abgasstrom vermischt wird, zusätzlich niedere Alkane und/oder Wasserstoff und/oder Sauerstoff enthält.

3. Verfahren nach einem der Ansprüche 1 oder 2, **dadurch gekennzeichnet, dass** die Ammoniak-Konzentration zu der Stickoxid-Konzentration in den zu mischenden Abgasströmen, übersteiöchiometrisch eingestellt wird, so dass die Umsetzung zu Stickstoff und Wasser ohne Zusatz weiterer Komponenten abläuft.

4. Verfahren nach einem der Ansprüche 1 oder 2, **dadurch gekennzeichnet, dass** in die Mischung des Ammoniak-haltigen Abgasstroms mit dem Stickoxid-haltigen Abgasstrom zusätzlich ein Reduktionsmittel eingedüst wird, das aus einer Gruppe ausgewählt wird, die Ammoniak, Ammoniakwasser und Harnstofflösung enthält.

5. Verfahren nach einem der Ansprüche 1 bis 4, **dadurch gekennzeichnet, dass** zunächst eine selektive nicht-katalytische Reduktion durchgeführt wird, an die sich eine selektive katalytische Reduktion anschließt.

6. Verfahren nach einem der Ansprüche 1 bis 5, **dadurch gekennzeichnet, dass** für die selektive katalytische Reduktion ein Katalysator verwendet wird, der vorzugsweise aus einer Gruppe ausgewählt wird, die Schwermetalloxide, Aktivkokse, Eisenoxid-Chromoxide und Zeolithe enthält.

7. Verfahren nach einem der Ansprüche 1 bis 6, **dadurch gekennzeichnet, dass** der Katalysator als Schüttung oder Wirbelschicht vorliegt und vorzugsweise monolithische und/oder wabenförmige Strukturen beinhaltet.

8. Anwendung des Verfahrens nach einem der vorstehenden Ansprüche, **dadurch gekennzeichnet, dass** das Verfahren für Abgase mit einem Ammoniakgehalt von 30 bis 50.000 mg/Nm³ geeignet ist.

9. Anwendung des Verfahrens nach einem der vorstehenden Ansprüche, **dadurch gekennzeichnet, dass** das Verfahren für Abgase mit einem Stickoxidgehalt von 75 bis 1500 mg/Nm³ geeignet ist.

## Claims

1. Process for the combined removal of both ammonia in one or more ammonia-containing waste gas flows and nitrogen oxides in one or more additional further nitrogen oxide-containing waste gas flows in a combined ammonia/urea synthesis plant according to the selective non-catalytic reduction in a temperature range from 850°C to 1100°, by which nitrogen oxide reduction rates of up to 80% are achieved, or according to the selective catalytic reduction in a temperature range from 150°C to 550°C, by which nitrogen oxide reduction rates of up to 99% are achieved, in which the ammonia and the nitrogen oxides react with one another to give nitrogen and water, in which the ammonia-containing waste gas flow to be treated from a low-pressure absorber and/or an atmospheric absorber of the urea synthesis plant unit being mixed with the nitrogen oxide-containing waste gas flow to be treated from a flue gas duct of a primary reformer of the ammonia synthesis plant of the combined ammonia/urea synthesis plant and being subjected to a selective non-catalytic reduction or a selective catalytic reduction depending on the temperature of the mixture and depending on the nitrogen oxide reduction rate to be reached, both the ammonia and the nitrogen oxides of the mixed waste gas flows being depleted simultaneously during the same process step.

2. Process according to claim 1, **characterised in that** the ammonia-containing waste gas flow which is mixed with the nitrogen oxide-containing waste gas flow additionally contains lower alkanes and/or hydrogen and/or oxygen.

3. Process according to claim 1 or 2, **characterised in that** the ammonia concentration is adjusted hyperstoichiometrically to the nitrogen oxide concentration in the waste gas flows to be mixed so that the conversion into nitrogen and water takes place without addition of any other components.

4. Process according to claim 1 or 2, **characterised in that** a reducing agent selected from a group comprising ammonia, aqueous ammonia and urea solution is additionally injected into the mixed flows of ammonia-containing waste gas and nitrogen oxide-containing waste gas.

5. Process according to one of claims 1 to 4, **characterised in that** a selective non-catalytic reduction is carried out first, which is followed by a selective catalytic reduction.

6. Process according to one of claims 1 to 5 **characterised in that** a catalyst preferably selected from a group comprising heavy metal oxides, activated char, iron oxide-chromium oxides and zeolites is used for the selective catalytic reduction.

7. Process according to one of claims 1 to 6, **characterised in that** the catalyst is provided as fixed bed or fluidised bed and is preferably of monolithic and/or multicellular structures.

8. Application of the process according to one of the aforementioned claims, **characterised in that** the process is suitable for waste gases of an ammonia content of 30 to 50,000 mg/Nm³.

9. Application of the process according to one of the aforementioned claims, **characterised in that** the process is suitable for waste gases of a nitrogen oxide content of 75 to 1500 mg/Nm³.

## Revendications

1. Procédé pour une élimination combinée de l'ammoniaque dans un ou plusieurs flux d'effluents gazeux ammoniacaux et des oxydes nitriques dans un ou plusieurs autre(s) flux d'effluents gazeux d'oxydes nitriques dans une installation de synthèse combinée pour ammoniaque et urée, après une réduction sélective non catalytique sur une plage de température comprise entre 850°C et 1100°C permettant d'atteindre un taux d'élimination des oxydes nitriques allant jusqu'à 80 % ou après une réduction sélective catalytique sur une plage de température comprise entre 150°C et 500°C permettant d'atteindre un taux d'élimination des oxydes nitriques allant jusqu'à 99 %, l'ammoniaque et les oxydes nitriques réagissant ensemble pour être transformés en azote et en eau, tout en sachant que sont mélangés le flux d'effluents gazeux ammoniacaux à traiter provenant d'un absorbeur à basse pression et/ou d'un absorbeur atmosphérique de la partie d'installation destinée à la synthèse de l'urée ainsi que le flux d'effluents gazeux d'oxydes nitriques à traiter provenant d'une conduite d'effluents gazeux d'un reformeur primaire de la partie d'installation destinée à la synthèse de l'ammoniaque de l'installation de synthèse combinée pour ammoniaque et urée et sachant que selon la température du mélange et selon les taux d'élimination des oxydes nitriques visés, il est réalisé une réduction sélective non catalytique ou une réduction sélective catalytique pour éliminer dans une même étape de processus aussi bien l'ammoniaque que les oxydes nitriques des flux d'effluents gazeux mélangés.

2. Procédé selon la revendication 1, **caractérisé en ce que** le flux d'effluents gazeux ammoniacaux mélangé au flux d'effluents gazeux d'oxydes nitriques contient en plus des alcanes inférieurs et/ou de l'hydrogène et/ou de l'oxygène.

3. Procédé selon une des revendications 1 ou 2, **caractérisé en ce que** dans les flux d'effluents gazeux à mélanger, le rapport de la concentration en ammoniaque et de la concentration en oxydes nitriques est réglé de manière hyper-stoechiométrique, pour que la transformation en azote et en eau se fasse sans addition d'autres composants.

4. Procédé selon une des revendications 1 ou 2, **caractérisé en ce qu'**un agent réducteur, sélectionné dans un groupe contenant de l'ammoniaque, de l'ammoniaque liquide et une solution d'urée, est injecté en supplément dans le mélange du flux d'effluents gazeux ammoniacaux avec le flux d'effluents gazeux d'oxydes nitriques.

5. Procédé selon une des revendications 1 à 4, **caractérisé en ce qu'**il est réalisé dans un premier temps une réduction sélective non catalytique suivie d'une réduction sélective catalytique.

6. Procédé selon une des revendications 1 à 5, **caractérisé en ce qu'**il est utilisé un catalyseur, sélectionné de préférence dans un groupe d'oxydes de métal lourd, des cokes activés, des oxydes de fer de chrome ainsi que des zéolithes.

7. Procédé selon une des revendications 1 à 6, **caractérisé en ce que** le catalyseur est présent sous forme de garnissage ou lit fluidisé et comprend de préférence des structures monolithiques et/ou caverneuses.

8. Application du procédé selon une des revendications ci-dessus, **caractérisée en ce que** le procédé destiné aux effluents gazeux est approprié pour une teneur en ammoniaque comprise entre 30 et 50.000 mg/Nm³.

9. Application du procédé selon une des revendications ci-dessus, **caractérisée en ce que** le procédé destiné aux effluents gazeux est approprié pour une teneur en oxydes nitriques comprise entre 75 et 1500 mg/Nm³.
